# EUROPEAN PATENT APPLICATION

(11) **EP 2 109 340 A1**
(43) Date of publication of application: **14.10.2009**
(21) Application number: 08007198.8
(22) Date of filing: 11.04.2008
(51) Int. Cl.: H04W 88/08, H04W 24/00

(54) **Method and apparatus for assigning configuration information in a wireless telecommunications system**

(71) Applicant: Nokia Siemens Networks Oy, 02610 Espoo (FI)
(72) Inventor: Martos-Riano, Demian, 2521 BM The Hague (NL); Pollakowski, Olaf, Dr., 81679 München (DE); Sanneck, Henning, Dr., 81669 München (DE); Vossnacker, Frank, 14612 Falkensee (DE)
(74) Representative: Bruglachner, Thomas E.

(57) **Abstract**

Apparatus and method for generating configuration information in a wireless telecommunications system (1000) comprising the steps of:
- checking whether a message received from a second access node (200) of a plurality of access nodes at a first access node (100) of a plurality of access nodes comprises an indicator;
- generating, upon said indicator being present, by said first access node (100) of said configuration information, and
- transmitting by said first access node (100) said configuration information to said second access node (200).

## Description

### Field of the invention

The invention is used in wireless telecommunications systems to ensure that configuration information is assigned in a timely and efficient manner throughout wireless telecommunications systems.

### Summary of the invention

In wireless telecommunication systems, connectivity between mobiles stations (MS) and the PSTN (Public Switched Telephone Network) and/or the internet is provided by the radio access network (RAN). The point at which an MS accesses the RAN is at an access node (AN). An AN can be at least one of the following: a base station (BS), a radio network controller (RNC), a base station controller (BSC), a nodeB, an enodeB. Each AN covers a specific area defined as a "cell" within which it provides connectivity services to MSs located within the cell.

Due to the increase in MSs within such telecommunication systems, it is necessary in order to handle them, to add ANs within the already existing RAN. During the establishment of a new AN within the RAN configuration information such as identifiers, have to be assigned to the cell managed by the AN. It can also happen that a AN can manage more than one cell. In this case identifiers have to be assigned for each cell.

These identifiers include:
A physical identifier, allowing a MS to identify a cell over the air interface. This identifier is called "a physical" or "a layer 1" identifier. In GERAN (GSM EDGE Radio Access Network) networks this identifier is called BSIC (Base Station Identity Code), in a W-CDMA (Wideband-Code Division Multiple Access) network this identifier corresponds to the scrambling code. In a LTE (Long Term Evolution) network this identifier is called a "physical cell identifier" (PHY-CID).

An identifier, identifying the cell in an OAM (Operation and Maintenance) network, the OAM-CID.

An identifier, identifying the cell on the call processing interfaces, such as the UC-Id on the Iu interface.

A globally unique cell identifier (GLOBAL-CID).

Furthermore, in LTE for example, certain additional conditions need to be met:

The PHY-CID (or maximum cell space) can not be above 504. Cells with overlapping coverage must not have the same PHY-CID. Cells must not have two or more neighbouring cells with the same PHY-CID. The GLOBAL-CID must be globally unique for each cell within the network. The OAM-CID must be unique within the PLMN (Public Land Mobile Network) of an operator. In case OAM operations span two or more PLMNs, it has to be unique within all PLMNs concerned. Each call processing interface also requires a cell identifier.

Currently, configuration information is assigned during the network setup phase, however in the event that changes to the RAN occur during operation, i.e. new ANs need to be added, there is no optimal way in which to perform this. This in turn causes a huge amount of workload to be generated as the whole network needs to have new configuration information.

This can lead to errors occurring and when they occur, the efficiency of the system is greatly reduced.

Additionally, if certain ANs in a network are not active, certain of the above mentioned requirements might be violated or the cell identity (ID) assignment may be sub-optimal. This can occur in networks that support automated neighbour relationships (ANR) setup, which do not allow for the correlation between cell IDs with neighbour relationships. Also, in such cases, the maximum cell space (504 cells in LTE) is exhausted faster as both active and inactive nodes are taken into account, leading to higher probability of errors in the assignation of configuration information to different cells.

Furthermore, for networks such as wireless mesh networks for example, where no planning of individual ANs takes place, it is still necessary to provide cell IDs. Without being able to recognise the cell, MSs will have no way of ascertaining where they are and to which AN they are attached to, further reducing the efficiency of the network.

In all the above cases, configuration information is centrally assigned during the network setup phase. However, as mentioned above, such an approach does not provide an optimal solution to a dynamically changing system. In order to overcome this problem, a distributed approach to assigning configuration information has been proposed. In the distributed approach, decisions, for example, about configuration information are made by the ANs themselves or by an AN controlling a group of ANs. In this way, if any changes occur, the configuration information can be updated or changed efficiently and quickly without necessitating a complete re-planning of the system.

Nevertheless, distributed approaches require a number of centralised control points throughout the system, thus reducing the efficiency of the system, as it is necessary for a central control point to verify and authenticate any locally generated configuration information. In addition, as such configuration information can be concurrently generated within the system, it is necessary to implement complex and time/resource consuming conflict detection mechanisms either at the central control points or at an intermediate level within the system hierarchy. The time and/or resources required as well as the necessary communication overhead will reduce the overall efficiency of the system and that of any time critical services provided. Furthermore, such distributed approaches rely on local measurements made by MSs and/or other network elements in order to identify potential neighbour relationships. As such measurements are prone to error, conflicts in the configuration can occur, requiring further correction and loss of system efficiency.

A need therefore exists for a technique that can provide configuration information efficiently without wasting system resources and without affecting services being provided.

With the present invention, the above mentioned issues are resolved. The technique is achieved by the teachings contained in the independent method claim 1.

Said independent method generates configuration information in a wireless telecommunications system comprising the steps of:
- checking whether a message received from a second access node of a plurality of access nodes at a first access node of a plurality of access nodes comprises an indicator;
- generating, upon said indicator being present, by said first access node of said configuration information, and
- transmitting by said first access node said configuration information to said second access node.

Further advantageous embodiments can be seen in the dependent claims.

### Short description of the drawings

The present invention will become more fully understood from the description given herein below and the accompanying drawings which are given by way of illustration only and thus are not limitative of the present invention, and wherein:
Fig. 1 depicts a wireless telecommunications system wherein the invention can be implemented.
Fig. 2 depicts a flow diagram indicating the steps of the method.

### Detailed description of the invention

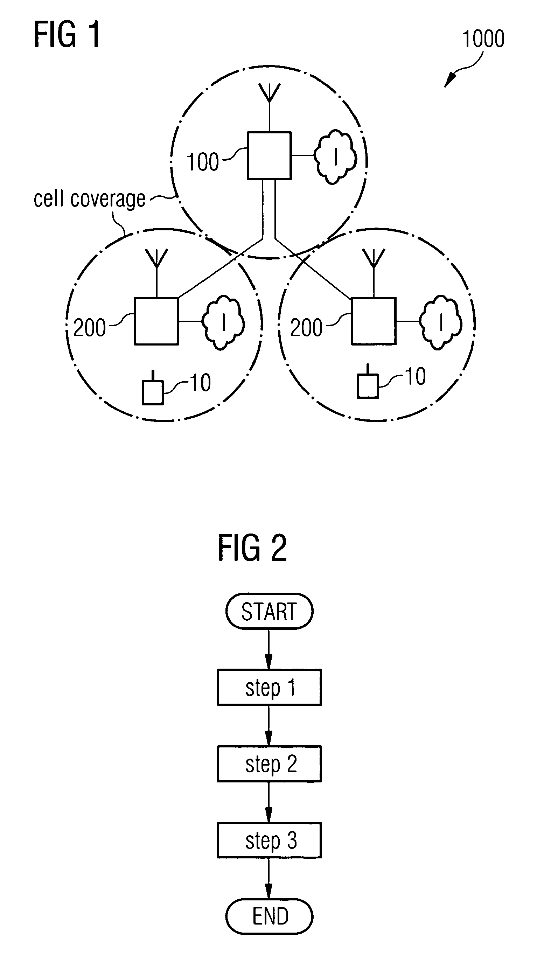

Fig. 1 depicts a wireless telecommunications system 1000 wherein the invention can be implemented. ANs 100, 200 are part of a RAN that provides connectivity between MSs 10 and the PSTN and/or the internet 1. Each AN 100, 200 covers a specific area defined as a "cell", within which it provides connectivity services to MSs 10. An AN can be at least one of the following: a base station (BS), a radio network controller (RNC), a base station controller (BSC), a nodeB, an enodeB. AN 100 acts as an assignment server (AS) for a group of ANs 200. AN 100 provides ANs 200 with configuration information. The configuration information comprises of a minimum set of information that allows AN 200 and the cell which it provides to be recognised and identified within system 1000 and by MSs 10 entering the coverage area of the cell. At a minimum, the minimum set of information comprises of a physical cell identifier (PHY-CID). The set of information can further comprise neighbourhood information, re-assignment information. AN 100 acting as an AS can be a centrally located AN or can be one of a series of ANs 100 distributed throughout the system 1000 that supervises a group of ANs 200 and provides ANs 200 with configuration information.

Fig. 2, depicts a flow diagram indicating the steps of the method. When a new cell becomes active the AN 200 that controls the cell will transmit a message to AN 100. The message transmitted comprises of an indicator, the indicator indicating the GLOBAL-CID of the cell in question, the geographical location (g) of the cell and a description of the full geographical description (d) of the cell or the report comprises of an indicator enabling a set of information (g, d, GLOBAL-CID) can be determined.

In step 1, AN 100 checks whether the message received from AN 200 comprises of an indicator. Once the check has been completed, in step 2, AN 100 generates the configuration information. In step 3, AN 100 transmits the configuration information to AN 200. The configuration information transmitted comprises of a minimum set of information required by AN 200 to define the cell. The minimum set of information being a physical cell identifier (PHY-CID).

In a further refinement of the invention, step 2 further comprises the following steps:

Based on the geographical location (g) of the cell and the description of the full geographical description (d) of the cell, AN 100 identifies a current set of cell identifiers of potential neighbouring cells (N), which are neighbouring cells that have an overlapping coverage with the new cell. AN 100 further identifies a further set of cell identifiers of potential neighbouring cells (NN), which are neighbouring cells that have an overlapping coverage with the potential neighbouring cells (N).

AN 100 then generates the configuration information, at a minimum the PHY-CID, by assigning a PHY-CID comprised within a set (S), S being the maximum cell space available within system 1000 (504 cells in LTE, i.e. 504 cells identifiers). The PHY-CID is taken from a subset of identifiers which have not yet been used at all. If this is not possible then an identifier, which fulfils the following requirements is taken: the identifier must not be contained within N and NN and is different from an identifier that has been reused before from set S.

If a PHY-CID found then AN 100 adds the GLOBAL-CID of the cell, the geographical location (g) of the cell and the description of the full geographical description (d) of the cell into a database arranged to store the set of global cell identifiers and corresponding set of cell identifiers, set of geographical locations and set of coverage descriptions. The generated CID is then added to a list comprising all used CIDs. Then AN 100 transmits the PHY-CID to AN 200. If a CID is not found then an error message will be returned indicating that S is exhausted.

If N contains one or more subsets (SN) which each contain a set of two or more potential neighbours (FN) with the same cell identifier, in order to avoid confusion an error message is returned indicating that S is exhausted. A re-assignment is then performed. During the re-assignment, for each subset (SN) AN 100 verifies that the PHY-CID does not fall within the cell identifiers that are already in use by the potential neighbours (FN). If a CID is not found then an error message will be returned indicating that S is exhausted.

In the event that AN 200 transmitted a message containing an indicator indicating two or more new cells, these are serialised by AN 100 in order to generate the PHY-CIDs one after the other.

An implementation of the above described step 2 is defined by the following algorithm:
*Cell_ID_Assignment (*GLOBAL-CID, *g*, *d*, *c_{R})* algorithm executed at the AN 100
   - Identification of
      o current set of IDs of potential neighbors *N* (cells with overlapping coverage to new cell) based on the geo-location and geographical coverage information
      o current set of IDs of potential neighbors of neighbors *NN* (cells with overlapping coverage with respect to the potential neighbour set *N*)
   - Assignment of an ID *c* contained in the set *S* which satisfies the following requirements
      o if there is a subset of IDs which have not been used at all (not in Used_ID_Set), choose c from this subset else choose *c* with the constraints
         ■ *c* is not contained in set *N* (new cell has no "collision")
         ■ *c* is not contained in set *NN* (new cell causes no "confusion" for any of its neighbors)
         ■ *c* ≠ *c_{R}*
   - If no *c* found return with error "ID set exhausted"
   - Add GLOBAL-CID, *c, g* and *d* to the database containing the set of global cell IDs *GID,* and corresponding set of cell IDs *C*, set of geo-locations *G* and set of coverage descriptions *D*
   - If set *N* contains one or more subsets *SNᵢ* with i ∈ [1,j] which each contain a set of two or more potential neighbors *FNₖ (SNᵢ)* with k ∈ [1,l] with the same cell IDs ("confusion" of the new cell)
      o If *Reassignment (SN_{1...k}) = "failure" return "ID set exhausted"*
   - Add *c* to Used_ID_Set
   - Return *c* to node
*Reassignment (SN*₁₋ⱼ*)*
   - For each subset *SNᵢ* with i ∈ [1,j]
      o For each neighbour *FNₖ (SNᵢ)* with k ∈ [2,l]
         ■ *cfᵢₖ* = *Cell_ID_Assignment (*GLOBAL-CID*_{FNk}* , *g_{FNK}*, *d_{FNK}, c(FNₖ (SN_{¡}*)) *)*
         ■ *if cfᵢₖ* = *"ID set exhausted" return "failure"*
   - *return "success"*

As mentioned herein above, the report transmitted in the message from An 200, comprises of an indicator enabling the set of information (g, d, GLOBAL-CID) can be determined. For example, the full geographical coverage description, might not be provided as it is not practical. In such cases, AN 100 will generate the PHY-CIDS by approximating the full geographical coverage description with a topological map or with a calculation of the distance between ANs. Step 2 is further refined. As AN 100 calculates for all possible PHY-CIDs that can be considered the re-use distance associated to it. The re-use distance is the distance to the closest AN that is already using the same PHY-CID.

The PHY-CID with the highest re-use distance is then selected as a potential candidate CID for assignment for the cell. AN 100 then verifies that the CID complies with the requirements mentioned herein above. AN 100 verifies this in the same way as when identifying the current set of cell identifiers of potential neighbouring cells (N) and when identifying the further set of cell identifiers of potential neighbouring cells (NN).

If AN 100 determines that the PHY-CID selected fulfils the requirements then the configuration information is transmitted to AN 200.

If AN 100 determines that the PHY-CID selected does not fulfil the requirements, the causes of this are stored in a database and the next highest re-use distance is then selected.

This cycle will take place until a PHY-CID is selected that fulfils the requirements. If no PHY-CID is selected then an error message will be returned indicating that S is exhausted.

By storing the different causes leading to the requirements not being met, provides the network operator with information that can be used at a later stage for fine-tuning, correcting and if necessary modifying the system architecture within system 1000.

The calculation for all possible PHY-CIDs that can be considered the re-use distance and the verification of the selected highest re-use PHY-CID take into account error margins that can exist. As a result more than one PHY-CID may be found that could be use for generating the configuration information. This might increase the processing time for reaching a final result, however the end result will be the optimal one.

In addition, apart from generating configuration information comprising at a minimum of a PHY-CID for a cell, the invention can also generate further information such as a list of potential neighbouring cells and/or of the different relationships between the neighbouring cells. This information comprises for each possible PHY-CID of the cell or cells that is/are closest to it in terms of approximate coverage with the cells own coverage. This information comprises of at least the GLOBAL-CID of the cell, as well as the network address of the AN 200 providing the cell coverage. The list can further be refined in providing blocks of information distinguishing actual neighbours that is cells that have overlapping coverage from distant non-neighbouring cells. Such information can be advantageously used by ANs 100, 200 for handover purposes within system 1000.

In a further refinement of the above, instead of considering the PHY-CID with the highest re-use distance a PHY-CID which lies beyond a circle of radius R around the geographical location of the node AN 200 that provides the cell in question.

When generating the configuration information using radius R, instead of calculating individual distances to all ANs 200, ANs 200 within a certain radius R around the AN 200 providing the cell are taken into account and are considered as overlapping in coverage with the cell of AN 200. All other ANs 200 beyond R are considered to be non-overlapping. Furthermore, if no unique PHY-CID can be selected within R, then the radius is reduced until a suitable PHY-CID is selected. The reduction in R is done in discrete steps allowing for a faster execution of the process.

An implementation of the above described step 2 when using a radius R is defined by the following algorithm:
*Cell_ID_Assignment* (GLOBAL-CID, *g*) algorithm executed at AN 100
   - Set array of radius values *Rᵢ* with i ∈ [1,n] (e.g., R₁=∞, R₂=4r, R₃=2r, R₄=r) where r is a radius representing an approximation to a "typical" coverage region of a cell
   - i := 0
   - While (i<=n)
      o i := i+1;
      o Set R= Rᵢ
      o Identification of
         ■ current set of IDs of potential neighbors *N* (cells with overlapping coverage to new cell): all cells which have their geo-location *gN* within the circle of radius *R* around the geo-location *g*
         ■ current set of IDs of potential neighbors of neighbors *NN* (cells with overlapping coverage with respect to the potential neighbour set *N*): all cells which have their geo-location *gNN* within the circle of radius *R* around the geo-location *gN*
      o Assignment of an ID *c* contained in the set *S* which satisfies the following requirements
         ■ *c* is not contained in set *N* (new cell has no "collision")
         ■ *c* is not contained in set *NN* (new cell causes no "confusion" for any of its neighbors)
         ■ if there is a subset of IDs which have not been used at all, choose c from this subset
      o If *c* found exit loop
   - If no *c* found return with error "ID set exhausted"
   - Add GLOBAL-CID, *c*, *and g* to the database containing the set of global cell IDs *GID*, and corresponding set of cell IDs *C* and set of geo-locations *G*
   - If set *N* contains one or more subsets *SNᵢ* with i ∈ [1,j] which each contain a set of two or more potential neighbors *FNₖ (SNᵢ )* with k ∈ [1,l] with the same cell IDs ("confusion" of the new cell)
      o If *Reassignment (SN_{1...k} )* = *"failure" return "ID set exhausted"*
   - Add *c* to Used_ID_Set
   - Return *c* to node
*Reassignment (SN*_{*1*..j}*)*
   - For each subset *SNᵢ* with i ∈ [1,j]
      o For each neighbour *FNₖ (SNᵢ)* with k ∈ [2,1]
         ■ *cfᵢₖ* = *Cell_ID_Assignment* (GLOBAL-CID*_{FNk}* , *g_{FNk}, c(FNₖ (SNᵢ* )) *)*
         ■ *if cfᵢₖ* = *"ID set exhausted" return "failure"*
   - *return "success"*

In addition, instead of a circle, any other shape can be used in order to approximate the best cell coverage.

As mentioned herein above, a re-assignment is performed, when N contains one or more subsets (SN) which each contain a set of two or more potential neighbours (FN) with the same cell identifier. In addition, in order to avoid confusion an error message is returned indicating that S is exhausted.

The inventive method can be stored as a computer programme and executed on a processor located on an apparatus that executes the method. An apparatus having means arranged to execute the steps of the method can be at least one of the following: a base station (BS), a radio network controller (RNC), a base station controller (BSC), a nodeB, an enodeB.

The invention provides the following advantages:
It eliminates concurrent operations which can lead to undetected conflicts by serialising incoming requests for configuration information. The communication overhead and response time is reduced as the access node that acts as an assignment server is close to the requesting access nodes. In this way the overall amount of processing is reduced thus ensuring that the overall efficiency of the system is not affected. As configuration information is provided to an access node providing a new cell all existing cell information is used in order to generate configuration information that is unique and so avoids causing confusion and collisions within the network architecture, thus also ensuring that the efficiency of the system is not affected due to dynamic changes that occur.

Although the invention has been described in terms of preferred embodiments and refinements described herein, those skilled in the art will appreciate other embodiments and modifications which can be made without departing from the scope of the teachings of the invention. All such modifications are intended to be included within the scope of the claims appended hereto.

## Claims

1. Method for generating configuration information in a wireless telecommunications system (1000) comprising the steps of:
- checking whether a message received from a second access node (200) of a plurality of access nodes at a first access node (100) of a plurality of access nodes comprises an indicator;
- generating, upon said indicator being present, by said first access node (100) of said configuration information, and
- transmitting by said first access node (100) said configuration information to said second access node (200).

2. Method according to claim 1, wherein said indicator comprises information about a new active cell in said wireless telecommunications system.

3. Method according to claim 2, wherein said information comprises of a global cell identifier of said active cell, a geographical location identifier of said active cell and a description of a geographical coverage of said active cell.

4. Method according to claim 1, wherein said indicator comprises information enabling said first node to determine information about a new active cell.

5. Method according to any previous claim, wherein said configuration information comprises of a minimum set of information.

6. Method according to claim 5, wherein said minimum set of information comprises of a physical cell identifier.

7. Access node 100 for generating configuration information in a wireless telecommunications system 1000 having means arranged to execute the method of claims 1 to 6.

8. Access node 100 according to claim 8, wherein said access node is at least one of the following: a base station, a radio network controller, a base station controller, a nodeB, an enodeB.
